# EUROPEAN PATENT SPECIFICATION

(11) **EP 3 744 560 B1**
(45) Date of publication and mention of the grant of the patent: **08.06.2022**
(21) Application number: 20177141.7
(22) Date of filing: 28.05.2020
(51) Int. Cl.: B60L 50/50, B62K 11/14, B62M 25/08, F16H 59/02, B62K 23/02, B62J 50/22, B62M 7/02, F16H 61/02

(54) **ELECTRIC VEHICLE**
ELEKTROFAHRZEUG
VÉHICULE ÉLECTRIQUE

(30) Priority: 29.05.2019 JP 2019100528
(43) Date of publication of application: 02.12.2020
(73) Proprietor: YAMAHA HATSUDOKI KABUSHIKI KAISHA, Iwata-shi Shizuoka 438-8501 (JP)
(72) Inventor: MURASE, Hisashi, Iwata-shi, Shizuoka, 438-8501 (JP)
(74) Representative: Grünecker Patent- und Rechtsanwälte PartG mbB

(56) References cited:
- EP-A1- 2 189 346
- EP-A2- 1 132 288
- US-A1- 2015 274 257

## Description

The present disclosure relates to an electric vehicle and a method for controlling an electric vehicle capable of reverse driving.

JP 2010-120597 A and JP 2015-194213 A disclose a vehicle having a reverse mode allowing reverse driving.

The vehicle of JP 2010-120597 A sets the driving mode thereof to the reverse mode by pressing the reverse switch for the predetermined period of time. When the reverse switch is pressed during the reverse mode, the reverse driving is executed, and when the accelerator grip is operated, the forward driving is executed. As a result of the forward driving, when the vehicle speed in the forward direction exceeds the threshold value, the reverse mode is automatically released.

The vehicle of JP 2015-194213 A sets the driving mode thereof to the reverse mode when the shift-up switch and the shift-down switch are simultaneously pressed. During the reverse mode, the forward driving is executed when the shift-down switch is operated, and the reverse driving is executed when the shift-up switch is operated. When the shift-up switch and the shift-down switch are simultaneously pressed again during the reverse mode, the operation mode returns to the normal mode.

The conditions for the mode change defined in JP 2010-120597 A and JP 2015-194213 A would make a problem that the driver may not be certain whether the current driving mode is in the reverse mode when a state in which a driver does not operate anything during the reverse mode continues for a while. An object of the present disclosure is to provide an electric vehicle and a method for controlling an electric vehicle that can prevent a driver from being confused about whether an electric vehicle is still in a reverse mode after a reverse driving. According to the present invention said object is solved by an electric vehicle according to claim 1 or 13 and/or a method for controlling an electric vehicle according to claim 15. Preferred embodiments are laid down in the dependent claims.

Moreover, attitude stability of a vehicle body in reverse driving of a vehicle can be improved.

(1) An example of an electric vehicle proposed in the present disclosure includes an electric motor as a driving source of the vehicle, a control device, a first operating member operated by a driver, and a second operating member operated by the driver. The control device includes a forward mode for allowing forward driving of the vehicle and a reverse mode for allowing reverse driving of the vehicle. When a predetermined operation is performed on the first operating member and the second operating member, the control device selects the reverse mode to drive the vehicle backward. The control device automatically releases the selection of the reverse mode when the first operating member and the second operating member are no longer operated after reverse driving of the vehicle. The electric vehicle would prevent the driver from being confused as to whether the electric vehicle is still in the reverse mode after the reverse driving.
(2) In the electric vehicle of (1), the selection of the reverse mode may be permitted in a case where a vehicle speed is lower than a threshold value. According to this, the reverse mode can be selected after the vehicle speed is sufficiently lowered.
(3) In the electric vehicle of (1) or (2), the control device may further include a standby mode in which both forward driving and reverse driving of the vehicle are not permitted. The control device may transition to the standby mode when ending the selection of the reverse mode. According to this, it is possible to prevent the vehicle from suddenly going forward after the reverse mode ends.
(4) In the electric vehicle according to any one of (1) to (3), the control device may drive the electric motor in a first direction in the forward mode, and may drive the electric motor in a second direction, which is opposite to the first direction, in the reverse mode. According to this, the forward driving and the backward driving can be performed by one electric motor, and thus the number of components of the vehicle can be reduced.
(5) In the electric vehicle according to any one of (1) to (4), the control device may select the reverse mode during a period in which the operation on the first operating member is maintained. This allows the driver to easily recognize the period during which the reverse mode is selected.
(6) In the electric vehicle of (5), the control device may perform the reverse driving of the vehicle during a period in which the operation on the second operating member in the reverse mode is maintained. As a result, the driver can easily recognize the period during which the vehicle is driven backward, and can subtly adjust the position of the vehicle in an easier way.
(7) In the electric vehicle according to any one of (1) to (6), the first operating member and the second operating member may be disposed apart from each other. As a result, the attitude stability of the vehicle body can be improved during the reverse driving of the vehicle.
(8) In the electric vehicle of (7), the first operating member may be provided on one of the right portion and the left portion of a steering bar. The second operating member may be provided on the other of the right portion and the left portion of the steering bar. As a result, the driver supports the right portion and the left portion of the steering bar during the reverse driving of the vehicle, and thus the attitude stability of the vehicle body can be improved.
(9) In the electric vehicle according to any one of (1) to (8), the control device may select the reverse mode when an operation is performed on the first operating member. When an operation is performed on the second operating member in the reverse mode, reverse driving of the vehicle may be performed. The first operating member may be provided on the left portion of the steering bar, and the second operating member may be provided on the right portion of the steering bar. As a result, the driver supports the right portion and the left portion of the steering bar during the reverse driving of the vehicle, and thus the attitude stability of the vehicle body can be improved.
(10) In the electric vehicle according to any one of (1) to (9), the control device may select the reverse mode when the operation on the first operating member and the operation on the second operating member are continued for a predetermined time or longer. As a result, operability of the electric vehicle related to the reverse driving can be ensured.
(11) In the electric vehicle of (10), the control device may perform the reverse driving of the vehicle during a period in which the operation on the second operating member in the reverse mode is maintained.
(12) In the electric vehicle of (10), the first operating member may be a brake lever. This serves to prevent an increase in the number of parts of the vehicle.
(13) Another example of the electric vehicle proposed in the present disclosure includes an electric motor as a driving source of the vehicle, a control device, a first operating member provided on one of the right portion and the left portion of the steering bar, and a second operating member provided on the other of the right portion and the left portion of the steering bar. The control device starts reverse driving of the vehicle when at least the second operating member is operated in a state in which at least the first operating member is being operated. According to this, the driver supports the right portion and the left portion of the steering bar during the reverse driving of the vehicle, and thus the attitude stability of the vehicle body can be improved.
(14) In the electric vehicle of (13), the control device may perform the reverse driving of the vehicle during a period in which the operation on the second operating member is maintained in a state in which the first operating member is operated. This enables to subtly adjust the reverse driving of the vehicle. For example, by intermittently operating the second operating member while operating the first operating member, the reverse driving of the vehicle can be intermittently performed. As a result, it is possible to subtly adjust a position of the vehicle. In summary, the invention is defined by the appended independent claims. The dependent claims constitute embodiments of the invention.

### BRIEF DESCRIPTION OF THE DRAWINGS

FIG. 1 FIG. 1 is a side view showing an electric motorcycle, which is an example of an electric vehicle proposed in the present disclosure;
FIG. 2 is a plan view of a steering bar of the electric motorcycle.
FIG. 3 is a block diagram showing components of the electric motorcycle.
FIG. 4 is a block diagram showing functions of a control device.
FIG. 5 is a diagram showing a mode transition of the control device.
FIG. 6 is a flow chart showing processing the control device executes when a reverse switch is pressed.
FIG. 7 is a flow chart showing processing the control device executes when the forward switch is pressed.
FIG. 8 is a block diagram showing components of another example of an electric motorcycle.
FIG. 9 is a diagram showing a mode transition of the control device of the electric motorcycle shown in FIG. 8.
FIG. 10 is a flow chart illustrating processing executed by the control device when a brake lever is operated and the reverse switch is turned on in the electric motorcycle shown in FIG. 8.

### DETAILED DESCRIPTION OF PREFERRED EMBODIMENTS

The terminology used herein is for the purpose of describing particular embodiments. As used herein, the term "and/or" includes any and all combinations of one or more of the associated listed items. As used herein, the singular forms "a," "an," and "the" are intended to include the plural forms as well as the singular forms, unless the context clearly indicates otherwise. It will be further understood that the terms "comprises", "comprising", "includes", and/or "including", when used in this specification, specify the presence of stated features, steps, operations, elements, and/or components, but do not preclude the presence or addition of one or more other features, steps, operations, elements, components, and/or groups thereof.

Unless otherwise defined, all terms (including technical and scientific terms) used herein have the same meaning as commonly understood by one having ordinary skill in the art to which this invention belongs. It will be further understood that terms, such as those defined in commonly used dictionaries, should be interpreted as having a meaning that is consistent with their meaning in the context of the relevant art and the present disclosure and will not be interpreted in an idealized or overly formal sense unless expressly so defined herein.

In describing the present teaching, it will be understood that a number of technologies are disclosed. Each of these has individual benefit and each can also be used in conjunction with one or more, or in some cases all, of the other disclosed technologies. Accordingly, for the sake of clarity, this description will refrain from repeating every possible combination of the individual technologies in an unnecessary fashion.

In the following description, for purposes of explanation, numerous specific details are set forth in order to provide a thorough understanding of the present teaching. It will be evident, however, to one skilled in the art that the present teaching may be practiced without these specific details.

The present disclosure is to be considered as an exemplification of the related teaching.

The present teaching will now be described by referencing the appended figures representing embodiments. In the present disclosure, an electric motorcycle 1 will be described as an example of an electric vehicle. The present disclosure may be applied to an electric four-wheeled vehicle, an electric three-wheeled vehicle, an electric snow vehicle, for example.

### [Overall configuration of vehicle]

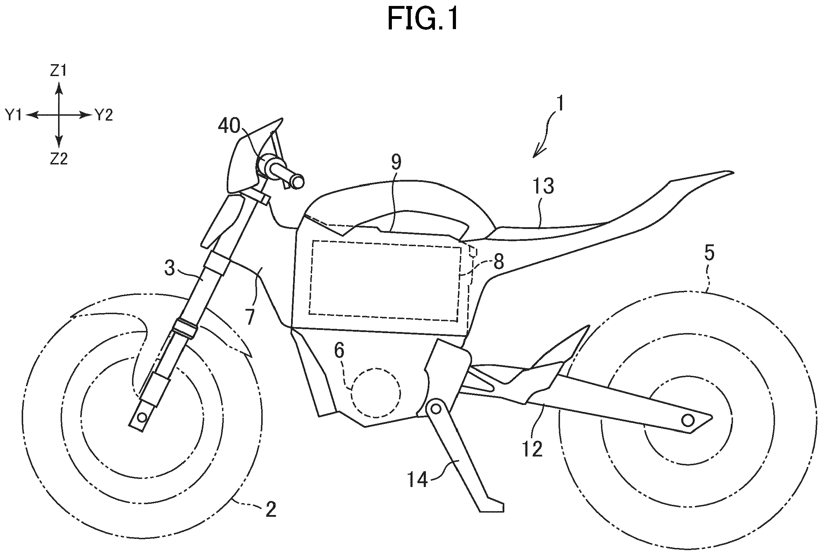

As shown in FIG. 1, the electric motorcycle 1 has a rear wheel 5 that is a driving wheel, and an electric motor 6 that drives the rear wheel 5. The torque (rotation) of the electric motor 6 is transmitted to the rear wheel 5 via a speed reduction mechanism (not shown) and a transmission member (e.g., chain, belt, shaft), for example. The electric motorcycle 1 has a battery 8 for storing electric power to be supplied to the electric motor 6. The battery 8 may be detachably attached to the vehicle body. In the exampled electric motorcycle 1, the battery 8 is disposed at the center of the vehicle body, and the electric motor 6 is disposed below the battery 8. The battery 8 is accommodated in a battery case 9. The layout of the battery 8 and the electric motor 6 is not limited to the example shown in FIG. 1, and may be appropriately changed.

As shown in FIG. 1, the electric motorcycle 1 includes a front fork 3 at the front and a front wheel 2 supported by the front fork 3 at its lower end. The front fork 3 is rotatable about a steering shaft supported at the foremost portion of a body frame 7. The electric motorcycle 1 has a seat 13, on which a driver can straddle, at its rear portion.

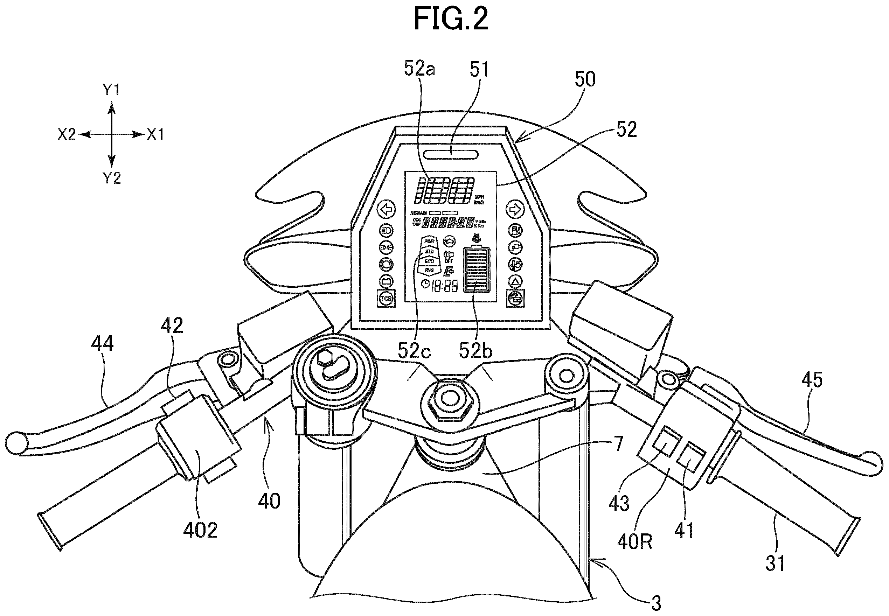

A steering bar 40 is fixed to the upper end of the front fork 3. As shown in FIG. 2, a display device 50 is provided at the center of the steering bar 40. An accelerator grip 31, a right switch unit 40R, and a brake lever 45 are provided on the right side of the steering bar 40. A brake lever 44 and a left switch unit 40L are provided on the left side of the steering bar 40. One of the brake levers 44 and 45 is connected to a braking device for the front wheel 2, and the other of the brake levers 44 and 45 is connected to a braking device for the rear wheel 5. The switch units 40R and 40L are provided with a plurality of switches including switches for the driver to select the running mode (a forward switch 41 and a reverse switch 42 described later) and switches for switching on/off the headlights (not shown).

As shown in FIG. 2, in the exampled electric motorcycle 1, the display device 50 has a mode indicator 51 that lights up according to the current operation mode. As will be described later, the electric motorcycle 1 has, as its operation modes, a forward mode in which forward driving of the electric motorcycle 1 is permitted, a reverse mode in which reverse driving of the electric motorcycle 1 is permitted, and a standby mode in which both of the forward mode and the reverse mode are regulated. For example, when the current operation mode is the reverse mode, the mode indicator 51 lights up in a predetermined form, and thereby notifies the driver of such information. The mode indicator 51 is formed of, for example, LEDs (Light Emitting Diode). In the example of FIG. 2, the mode indicator 51 has an elongated shape in the left-right direction, but the shape may be appropriately changed. The electric motorcycle 1 may have a speaker that generates sound in the reverse mode instead of the mode indicator 51 or together with the mode indicator 51.

As shown in FIG. 2, the display device 50 has a vehicle speed region 52a for displaying the vehicle speed, a battery remaining amount region 52b for displaying the remaining amount of the battery 8, and a mode guide region 52c for indicating the current operation mode. The display device 50 includes a display panel 52 (e.g., a liquid crystal display device) capable of displaying numbers, characters, and symbols. Each of the regions 52a, 52b, and 52c is, for example, a region defined in the display panel 52. The mode guide region 52c displays the current operation mode, i.e., the forward mode or the reverse mode described above. The electric motorcycle 1 may have a plurality of modes of the forward mode. For example, the electric motorcycle 1 may have three modes (ECO-mode, standard mode, and power mode) in which the magnitude of torque output by the electric motor 6 is different. In this case, not only the reverse mode but also these three modes may be displayed in the mode guide region 52c.

### [Controller, Switch, and Sensor]

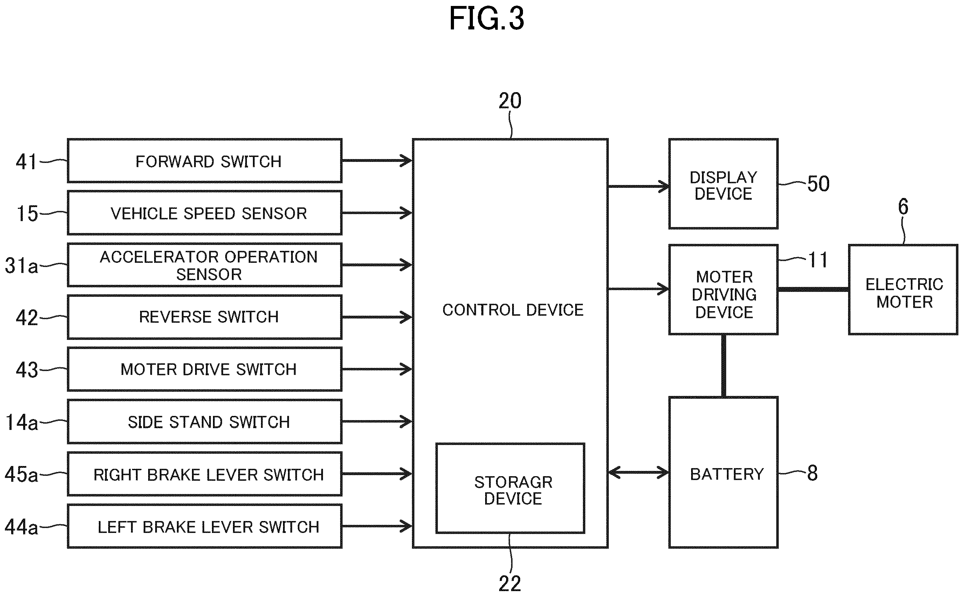

As shown in FIG. 3, the electric motorcycle 1 has a control device 20 and a motor driving device 11. The motor driving device 11 has an inverter, and uses the electric power received from the battery 8 to supply electric power corresponding to a command value (current command value) received from the control device 20 to the electric motor 6. The control device 20 includes a CPU (Central Processing Unit) and a storage device 22, for example. The control device 20 may be configured by a plurality of control devices each including a CPU and a storage device 22, for example, and capable of communicating with each other. Some of the functions of the control device may be implemented by FPGA (Field Programmable Gate Array). The control device 20 controls the electric motor 6. The control device 20 implements the forward movement and the reverse movement of the electric motorcycle 1 by the driving of the electric motor 6. The driver can subtly adjust the position of the electric motorcycle 1 by using the reverse movement of the electric motorcycle 1 in a parking space, for example. The control device 20 drives the electric motor 6 in the forward direction in the forward mode, and drives the electric motor 6 in the reverse direction in the reverse mode. Both the forward driving and the reverse driving are performed by one electric motor 6 in this manner, and thus the number of parts of the vehicle can be reduced.

The control device 20 is connected to the display device 50, and transmits information to be displayed on the display device 50 to the display device 50. As described above, the display device 50 includes the mode indicator 51, the vehicle speed region 52a, the mode guide region 52c, and the battery remaining amount region 52b, for example. As such, the control device 20 transmits the vehicle speed detected by a vehicle speed sensor 15 (see FIG. 3) to be described later and the current operation mode to the display device 50. Further, the control device 20 receives information of the remaining amount of the battery 8 from the controller built in the battery 8, and transmits such information to the display device 50.

As shown in FIG. 3, the electric motorcycle 1 includes a forward switch 41 (start switch), a reverse switch 42, a motor drive switch 43, a vehicle speed sensor 15, an accelerator operation sensor 31a, a side stand switch 14a, a right brake lever switch 45a, and a left brake lever switch 44a. The control device 20 receives signals output from these sensors and switches, and determines whether the mode change is successful based on the signals.

The reverse switch 42 and the motor drive switch 43 are, for example, buttons provided on the steering bar 40 (see FIG. 2), and enter signals corresponding to button operations (pressing operation and release of pressing) to the control device 20. For example, when each of the switches 42 and 43 is pressed, an ON signal is output, and when each of the switches 42 and 43 is released, an OFF signal is output. As will be described later, the control device 20 drives the electric motorcycle 1 backward due to the operation of the two switches 42 and 43. Further, as will be described later in detail, the two switches 42 and 43 are disposed far apart from each other in the left-right direction.

The forward switch 41 is also a button provided on the steering bar 40 (see FIG. 2), for example, and outputs a signal corresponding to the button operation (pressing operation and release of pressing). For example, when the forward switch 41 is pressed, an ON signal is output, and when the forward switch 41 is released, an OFF signal is output. The forward switch 41 is provided in the right switch unit 40R (see FIG. 2), for example, although may be provided in the left switch unit 40L.

The vehicle speed sensor 15 outputs a signal corresponding to the vehicle speed, for example, a signal corresponding to the rotation speed of the front wheel 2, and the control device 20 calculates the vehicle speed using the signal.

The accelerator operation sensor 31a is provided in the accelerator grip 31, and outputs a signal corresponding to the operation amount of the accelerator grip 31 (rotational position of the accelerator grip 31) (hereinafter, the operation amount of the accelerator grip 31 is referred to as an "accelerator operation amount").

The right brake lever switch 45a outputs a signal (e.g., ON signal and OFF signal) corresponding to the operation of the right brake lever 45, and the left brake lever switch 44a outputs a signal (e.g., ON signal and OFF signal) corresponding to the operation of the left brake lever 44. The brake lever switches 44a and 45a may be provided on the brake levers 44 and 45, or may be provided on the brake device.

The electric motorcycle 1 has a side stand 14 for supporting the electric motorcycle 1 in a standing state. The side stand switch 14a outputs a signal corresponding to the position of the side stand 14, i.e., a position standing on the ground or a position away from the ground.

### [Controller Processing]

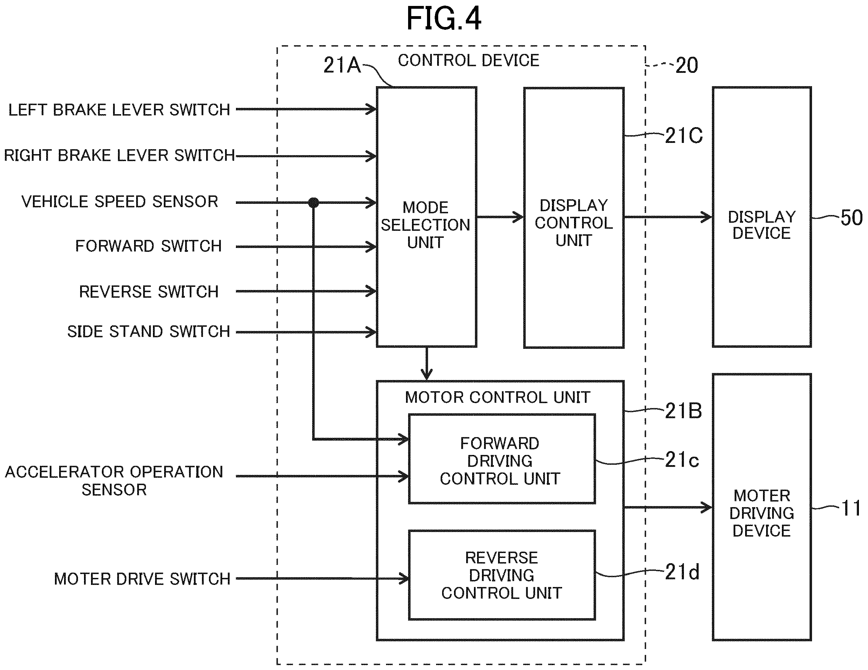

As shown in FIG. 4, the control device 20 includes, as its functions, a mode selection unit 21A, a motor control unit 21B, and a display control unit 21C. The motor control unit 21B has a forward driving control unit 21c and a reverse driving control unit 21d. These functions are implemented by CPUs that execute programs stored in the storage device 22 and FPGA.

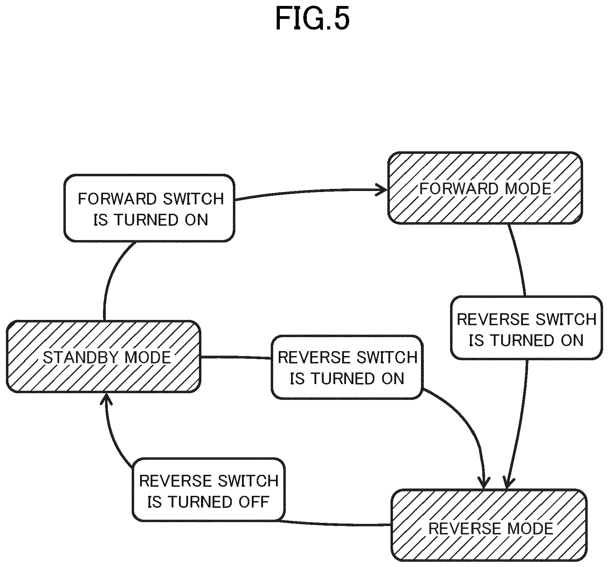

As shown in FIG. 5, the control device 20 has a forward mode, a reverse mode, and a standby mode as its operation modes. The mode selection unit 21A selects a current mode from among the three modes based on the signals from the above-described sensors and switches. As described above, the forward mode is a mode in which forward driving of the vehicle is permitted, and the reverse mode is a mode in which reverse driving of the vehicle is permitted. In the standby mode, both the forward driving and the reverse driving of the vehicle are prohibited. As such, even if the accelerator grip 31 is operated in the standby mode, the control device 20 does not output a command value corresponding to the operation to the motor driving device 11. Further, even if the motor drive switch 43 is pressed in the standby mode, the control device 20 does not output a command value corresponding to the operation to the motor driving device 11.

### [Forward mode]

Immediately after the power switch (not shown) of the vehicle is turned on, the mode selection unit 21A selects the standby mode. As shown in FIG. 5, when an ON operation (i.e., a pressing operation) is applied to the forward switch 41 in the standby mode, the mode selection unit 21A selects the forward mode. The mode selection unit 21A maintains the forward mode even after the pressing on the forward switch 41 is released.

The transition from the standby mode to the forward mode may be conditioned on one or more of the following (ii) to (iv) in addition to (i) "the forward switch 41 is turned on". That is, the mode selection unit 21A may select the forward mode only when (i) is satisfied and one or more of (ii) to (iv) are satisfied.
(ii) Vehicle speed is below a threshold value. (The threshold value is, for example, a value close to 0 km/h.)
(iii) The accelerator operation amount is equal to or less than a threshold value. (The threshold value is, for example, a value close to 0%.)
(iv) At least one of the brake levers 44 and 45 is operated.

The mode selection unit 21A releases the selection of the forward mode when a predetermined ending condition of the forward mode is satisfied. For example, when the side stand 14 is erected, the mode selection unit 21A ends the forward mode and selects the standby mode.

The forward driving control unit 21c controls the electric motor 6 in the forward mode. Specifically, the forward driving control unit 21c controls the electric motor 6 based on the vehicle speed and the accelerator operation amount detected through the vehicle speed sensor 15 and the accelerator operation sensor 31a, respectively. The memory device 22 stores in advance a map for associating the electric power (command value) to be supplied to the electric motor 6 with the accelerator operation amount and the vehicle speed. The forward driving control unit 21c refers to the map, and outputs a command value corresponding to the vehicle speed and the accelerator operation amount detected by the sensors 15 and 31a to the motor driving device 11.

### [Reverse mode]

As shown in FIG. 5, when an ON operation (i.e., pressing operation) is applied to the reverse switch 42 in either the forward mode or the standby mode, the mode selection unit 21A selects the reverse mode. In the exampled electric motorcycle 1, the mode selection unit 21A selects the reverse mode only during the period in which the pressing operation on the reverse switch 42 is maintained. That is, the reverse mode is started at the same time as the pressing operation is applied to the reverse switch 42. At the same time as the pressing on the reverse switch 42 is released, the selection of the reverse mode is released. According to such processing, the driver can easily recognize the period during which the reverse mode is selected.

Even when the pressing operation on a motor drive switch 43 to be described later is released, the mode selection unit 21A maintains the reverse mode as long as the pressing operation on the reverse switch 42 is maintained. As such, the reverse driving can be intermittently performed by, for example, intermittently operating the motor drive switch 43 while pressing the reverse switch 42. As a result, the position of the electric motorcycle 1 can be subtly adjusted in a parking space, for example.

In the exampled electric motorcycle 1, when the selection of the reverse mode is released, the mode selection unit 21A selects the standby mode instead of the forward mode. According to this, it is possible to prevent the vehicle from suddenly going forward after the reverse mode terminates. For example, it is possible to prevent the vehicle from starting the forward driving at the moment when the driver releases the pressing on the reverse switch 42 in a state where the accelerator grip 31 is unintentionally rotated.

The transition from the other modes (forward mode and standby mode) to the reverse mode may be conditioned on one or more of the following (vi) to (vii) in addition to (v) "pressing operation is applied to the reverse switch 42 ". That is, the mode selection unit 21A may select the reverse mode only when (v) is satisfied and one or more of (vi) to (viii) are satisfied.
(vi) Vehicle speed is below a threshold value. (The threshold value is, for example, a value close to 0 km/h.)
(vii) The accelerator operation amount is equal to or less than a threshold value. (The threshold value is, for example, a value close to 0%.)
(viii) The side stand 14 is not erected.

The conditions for the accelerator operation amount and the vehicle speed defined as described above enables the control device 20 to select the reverse mode after the vehicle speed and the torque of the electric motor 6 are sufficiently lowered.

When an ON operation (pressing operation) is applied to the motor drive switch 43 in the reverse mode, the reverse driving control unit 21d drives the electric motor 6 to perform the reverse driving of the electric motorcycle 1. In the exampled electric motorcycle 1, the reverse driving control unit 21d executes the reverse driving of the electric motorcycle 1 only during a period in which the pressing operation on the motor drive switch 43 is maintained in the reverse mode, that is, in a state in which the pressing operation is applied to the reverse switch 42. As such, in the reverse mode, the reverse driving of the electric motorcycle 1 is started at the same time as the pressing operation is applied to the motor drive switch 43. At the same time as the pressing on the motor drive switch 43 is released, the reverse driving of the electric motorcycle 1 stops. The process described above enables the driver to easily recognize the period during which the reverse driving of the vehicle is executed, and can subtly adjust the position of the vehicle in an easier way. When the pressing operation on the motor drive switch 43 is maintained but the pressing operation on the reverse switch 42 is released, the control device 20 releases the selection of the reverse mode and ends the reverse driving of the electric motorcycle 1.

The stop of the reverse driving may be conditioned not only on (x) "the pressing of the motor drive switch 43 has been released" but also on (xi) "the rear vehicle speed has exceeded a threshold value" (where the threshold value is, for example, 0.5 to 3 km/h). That is, when either one of (x) and (xi) is satisfied, the reverse driving control unit 21d may stop the reverse driving.

The reverse driving control unit 21d rotates the electric motor 6 in a direction opposite to the forward driving control unit 21c, thereby reversing the electric motorcycle 1. The reverse driving control unit 21d may control the torque of the electric motor 6 to be constant. For example, the reverse driving control unit 21d may output, to the motor driving device 11, a predetermined value as a command value of the electric power to be supplied from the motor driving device 11 to the electric motor 6. Alternatively, the reverse driving control unit 21d may control the electric motor 6 based on the vehicle speed detected by the vehicle speed sensor 15 so that the vehicle speed becomes constant. The control of the reverse driving control unit 21d is not limited to the example described here. For example, the torque output by the electric motor 6 in the reverse mode may not be constant. For example, the reverse driving control unit 21d may gradually decrease the torque output by the electric motor 6 in accordance with the elapsed time from the start of the pressing operation of the motor drive switch 43.

As described above, when a predetermined operation (pressing operation) is applied to the two switches 42 and 43, the control device 20 selects the reverse mode and drives the electric motorcycle 1 backward. In other words, the operation of the two switches 42 and 43 is required for the reverse driving. As such, it is possible to prevent the reverse driving unintended by the driver. Further, after the reverse driving, when the operation on the switches 42 and 43 (the pressing operation, more specifically, the operation on the reverse switch 42) is no longer performed, the selection of the reverse mode is automatically released. As such, it is possible to prevent the driver from being lost as to whether the electric motorcycle 1 is still in the reverse mode. Here, "the selection of the reverse mode is automatically released" means that the control device 20 releases the selection of the reverse mode even if there is no ON operation (e.g., pressing operation) on any of the switches.

The processing of the mode selection unit 21A and the reverse driving control unit 21d is not limited to the example described here. For example, the reverse driving control unit 21d may continue the reverse driving for a predetermined period of time from the time when the motor drive switch 43 is pressed, and stop the reverse driving when the predetermined period of time has elapsed. In this case, it is allowed for the driver to continuously press the motor drive switch 43 to continue the reverse driving for a predetermined period of time. The mode selection unit 21A may select the reverse mode when one or more of other operating members are operated instead of the reverse switch 42.

The reverse switch 42 and the motor drive switch 43 are, for example, momentary type switches. That is, each of the switches 42 and 43 has an elastic member to bias a movable portion toward an initial position. While the driver presses the movable portion against the force of the elastic member, the switches 42 and 43 are turned on. When the driver releases the finger from the movable portion, the movable portion returns to the initial position by the force of the elastic member, and the switches 42 and 43 become turned off. The movable portions of the switches 42 and 43 are, for example, buttons that can be pressed in a direction perpendicular to the plane on which the switches 42 and 43 are provided. Alternatively, the movable portions may be slidable in a direction parallel to the plane in which the switches 42, 43 are provided. As still another example, the reverse switch 42 and the motor drive switch 43 may be buttons displayed on the screen of the display device.

Preferably, the reverse switch 42 and the motor drive switch 43 are disposed apart from each other in the left-right direction. Consequently, the driver supports two positions apart from each other during the reverse driving, so that the attitude stability of the vehicle body can be improved. In the exampled electric motorcycle 1, the reverse switch 42 and the motor drive switch 43 are disposed on opposite sides of the center of the steering bar 40 in the left-right direction. The display device 50 is positioned between the reverse switch 42 and the motor drive switch 43. Consequently, the driver supports the right and left portions of the steering bar 40, so that the attitude stability of the vehicle body can be improved. In the exampled electric motorcycle 1, as shown in FIG. 2, the reverse switch 42 is provided on the left side (specifically, the left switch unit 40L) of the steering bar 40, and the motor drive switch 43 is provided on the right side (specifically, the right switch unit 40R) of the steering bar 40. Contrary to the exampled electric motorcycle 1, the reverse switch 42 may be provided on the right side of the steering bar 40, and a motor drive switch 43 may be provided on the left side of the steering bar 40.

### [Display Control]

The display control unit 21C displays the currently selected mode on the display device 50. As shown in FIG. 2, the display device 50 includes, for example, the mode guide region 52c and the mode indicator 51. When the reverse mode is selected, the display control unit 21C turns on the mode indicator 51 in a predetermined manner (e.g., red, which is a warning color), and displays a mark indicating "reverse" in the mode guide region 52c. When the forward mode or the standby mode is selected, the display control unit 21C turns off the mode indicator 51 or turns on the mode indicator 51 in a manner different from the reverse mode. When the forward mode is selected, the display control unit 21C displays, for example, a mark indicating "forward" in the mode guide region 52c. As described above, when the forward mode has a plurality of modes, such as an ECO mode, a standard mode, and a power mode, the display control unit 21C may display a mark representing the mode in the mode guide region 52c.

### [Process Flow]

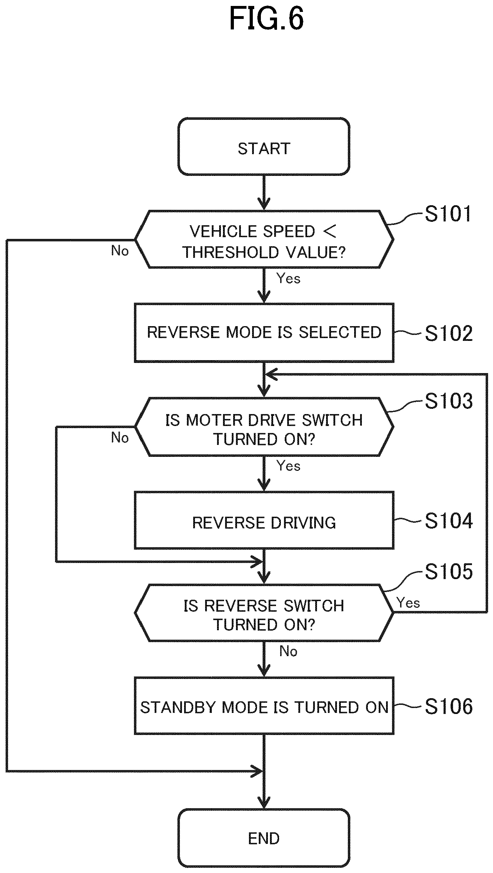

FIG. 6 is a flowchart showing an example of processing in the reverse mode. The process shown in the FIG. 6 starts when the reverse switch 42 is pressed.

When an ON operation (pressing operation) is applied to the reverse switch 42, the mode selection unit 21A determines whether the vehicle speed is smaller than a threshold value close to 0km/h (S101). When the vehicle speed is equal to or higher than the threshold value, the control device 20 ends the processing shown in FIG. 6. When the vehicle speed is smaller than the threshold value in the S101, the mode selection unit 21A selects the reverse mode (S102). At this time, the display control unit 21C displays the selection of the reverse mode on the display device 50, specifically, the mode indicator 51 and the mode guide region 52c. Next, the reverse driving control unit 21d determines whether an ON operation (pressing operation) is applied to the motor drive switch 43 (S103). When the motor drive switch 43 is turned on, the reverse driving control unit 21d rotates the electric motor 6 in the reverse direction to perform the reverse driving of the electric motorcycle 1 (S104). Subsequently, the mode selection unit 21A determines whether the ON operation is still being performed on the reverse switch 42 (S105). If the reverse switch 42 is still on, the control unit 20 returns to the S103 and executes the subsequent process. When the ON operation is not applied to the motor drive switch 43 in S103, the mode selection unit 21A determines whether the ON operation is applied to the reverse switch 42 without the drive of the electric motor 6 by the reverse driving control unit 21d being executed (S105). When the ON operation of the reverse switch 42 is released in S105, the mode selection unit 21A releases the selection of the reverse mode and selects the standby mode (S106). At this time, the display control unit 21C displays the fact that the standby mode has been selected on the display device 50. The control device 20 then terminates the processing.

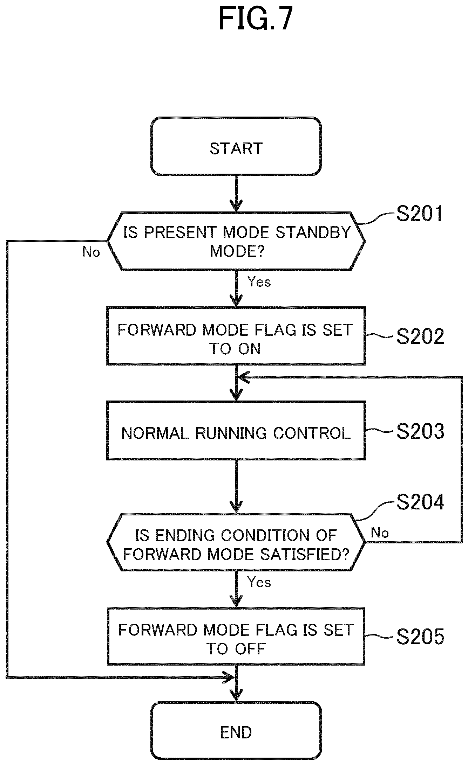

FIG. 7 is a flowchart showing an example of processing in the forward mode. The process shown in the FIG. 7 starts when the forward switch 41 is pressed.

When an ON operation (pressing operation) is applied to the forward switch 41, the mode selection unit 21A determines whether the present mode is the standby mode (S201). If the present mode is not the standby mode in S201, the controller 20 terminates the processing. If the present mode is the standby mode in S201, the mode selection unit 21A selects the forward mode and sets a forward mode flag recorded in the storage device 22 to ON (S202). At this time, the display control unit 21C displays the selection of the forward mode on the display device 50, specifically, the mode indicator 51 and the mode guide region 52c. Next, the forward driving control unit 21c performs normal running control. That is, the forward driving control unit 21c controls the electric motor 6 based on the vehicle speed and the accelerator operation amount respectively detected through the vehicle speed sensor 15 and the accelerator operation sensor 31a (S203). Subsequently, the mode selection unit 21A determines whether the ending condition of the forward mode is satisfied (S204). For example, the mode selection unit 21A determines whether the side stand 14 is erected based on the output of the side stand switch 14a, and whether the reverse switch 42 is turned on. When the ending condition of the forward mode is satisfied in the S204, the mode selection unit 21A releases the selection of the forward mode, sets the forward mode flag recorded in the storage device 22 to OFF (S205), and the control device 20 terminates the processing related to the forward mode. When the ending condition of the forward mode is not satisfied in the S204, the mode selection unit 21A maintains the forward mode, and the forward driving control unit 21c continues the normal running control (S203).

### [Other Examples]

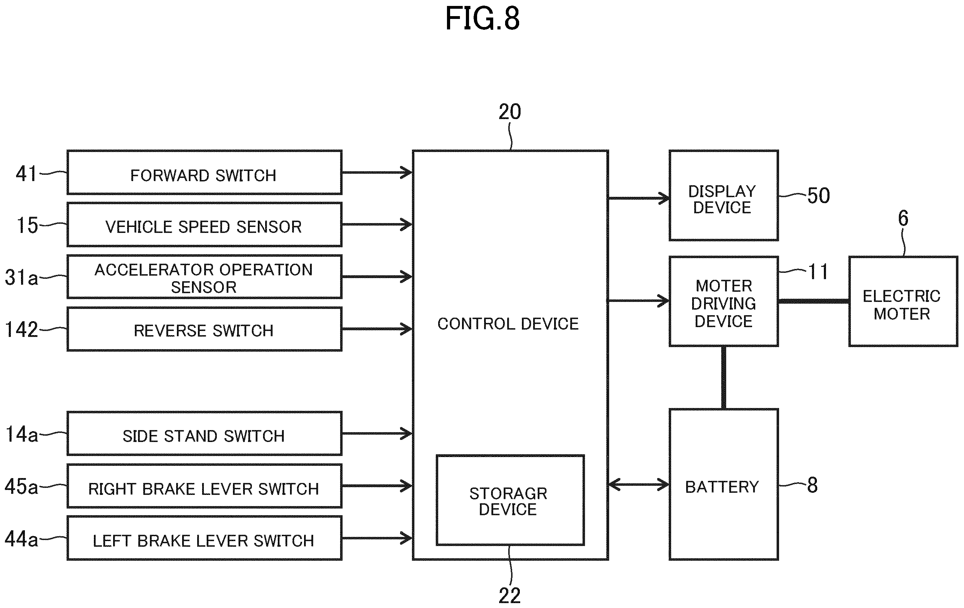

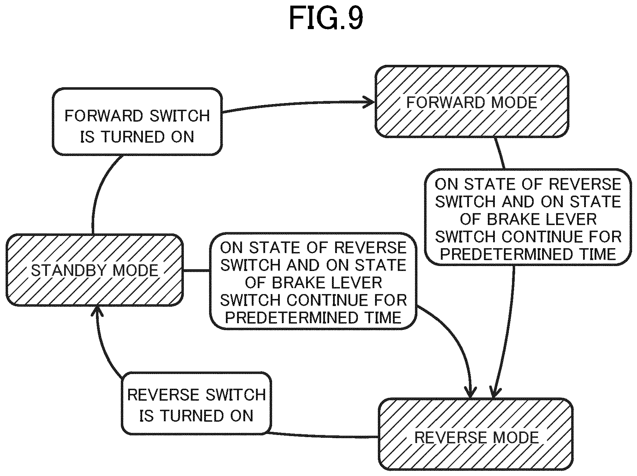

FIG. 8 is a block diagram showing a configuration of an electric motorcycle according to a variation of the electric vehicle proposed in the present disclosure. FIG. 9 is a diagram showing mode transition in this variation. In FIGs. 8 and 9, the same elements as those shown in FIG. 3 etc. are denoted by the same reference numerals. Hereinafter, description will be made focusing on points different from the example shown in FIG. 3 etc. Items that are not described may be the same as in the example shown in FIG. 3 etc.

As shown in FIG. 8, the electric motorcycle in the example shown here has one reverse switch 142 instead of the reverse switch 42 and the motor drive switch 43 described above. For example, the reverse switch 142 is provided on the left portion (specifically, the left switch unit 40L) of the steering bar 40, but may be provided on the right portion (specifically, the right switch unit 40R) of the steering bar 40. The reverse switch 142 is a momentary type switch similar to the reverse switch 42 described above.

As shown in FIG. 9, in either of the forward mode and the standby mode, the mode selection unit 21A (see FIG. 4) selects the reverse mode when a first state and a second state continue for a predetermined time, wherein the first state is an ON state of the reverse switch 142 in which the reverse switch 142 is subjected to the ON operation (pressing operation), and the second state is an ON state of the brake lever switch 44a in which the left brake lever 44 is held by hand. By utilizing the operation of the brake lever 44 in this manner, it is possible to prevent an increase in the number of parts of the electric motorcycle.

The reverse switch 142 and the brake lever 44 are positioned in the same direction (left direction) with respect to the center of the steering bar 40. The right brake lever 45 may be used instead of the left brake lever 44. That is, the mode selection unit 21A may select the reverse mode when the first state in which the reverse switch 142 receives the ON operation (pressing operation) and the second state in which the right brake lever 45 is gripped (the ON state of the brake lever switch 45a) continue for a predetermined time.

After the ON states of the two switches 142 and 44a continue for the predetermined period of time, the mode selection unit 21A may select the reverse mode when the two switches 142 and 44a are turned off. That is, after the ON state of the two switches 142 and 44a continues for the predetermined time, the mode selection unit 21A may select the reverse mode when the pressing of the reverse switch 142 is released and the grip of the left brake lever 44 is released.

In addition to the condition (xv) "the ON state of the reverse switch 142 and the ON state of the brake lever switch 44a continue for a predetermined period," one or more of the following (xvi) to (xviii) may be conditioned for the transition from another mode (forward mode and standby mode) to the reverse mode. That is, the mode selection unit 21A may select the reverse mode only when (xv) is satisfied and one or more of (xvi) to (xviii) are satisfied.
(xvi) The vehicle speed is equal to or less than a threshold value. (The threshold value is, for example, a value close to 0 km/h.)
(xvii) The accelerator manipulated variable is equal to or less than a threshold value. (The threshold value is, for example, a value close to 0%.)
(xviii) The side stand 14 is not erected.

In the reverse mode, after the reverse switch 142 and the brake lever switch 44a are turned off, the reverse driving control unit 21d drives the electric motor 6 to perform the reverse driving of the electric motorcycle 1 when the ON operation (pressing operation) is again applied to the reverse switch 142. Preferably, in the exampled electric motorcycle 1, the reverse driving control unit 21d performs the reverse driving of the electric motorcycle only during the period in which the pressing operation on the reverse switch 142 is maintained in the reverse mode. When the driver releases the pressing operation on the reverse switch 142 in the reverse mode, the reverse driving control unit 21d stops the reverse driving of the electric motorcycle 1, and at the same time, the mode selection unit 21A releases the selection of the reverse mode and selects the standby mode.

As described above, in the electric motorcycle of FIGS. 8 and 9 as well, when a predetermined operation (pressing operation) is performed on the reverse switch 142 and a predetermined operation (grip operation) is performed on the brake lever 44, the control device 20 selects the reverse mode and drives the electric motorcycle 1 backward. The process that the operation of the reverse switch 142 and the operation of the brake lever 44 are required for the reverse driving prevents the reverse driving from being unintentionally selected by the driver. Further, after the reverse driving, the selection of the reverse mode is automatically released when the predetermined operation (pressing operation) on the reverse switch 142 and the predetermined operation (grip operation) on the brake lever 44 are no longer performed. As such, it is possible to prevent the driver from being lost as to whether the electric motorcycle 1 is still in the reverse mode.

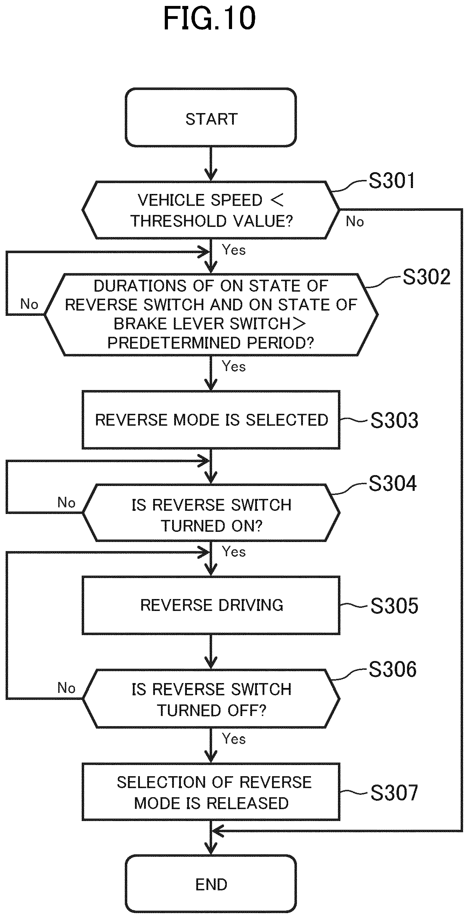

FIG. 10 is a flowchart showing an example of processing in the reverse mode. The processing shown in the FIG. 10 starts when the reverse switch 142 is pressed.

When an ON operation (pressing operation) is applied to the reverse switch 142, the mode selection unit 21A (see FIG. 4) determines whether the vehicle speed detected by the vehicle speed sensor 15 is smaller than a threshold value (S301). When the vehicle speed is equal to or higher than the threshold value in S301, the control device 20 ends the processing without shifting to the reverse mode. When the vehicle speed is smaller than the threshold value in S301, the mode selection unit 21A waits until the ON state of the brake lever switch 44a and the ON state of the reverse switch 142 continue for a predetermined period (S302). When the duration of these ON states reaches the predetermined time, the mode selection unit 21A selects the reverse mode (S303) and sets the reverse mode flag recorded in the storage device 22 to ON. When the ON state of the brake lever switch 44a and the ON state of the reverse switch 142 continue for a predetermined period of time and then they are turned off, the mode selection unit 21A may select the reverse mode (S303). After the reverse mode is selected in S303, the reverse driving control unit 21d (see FIG. 4) waits until the reverse switch 142 is turned on again (S304). When the reverse switch 142 is turned on, the reverse driving control unit 21d rotates the electric motor 6 in the reverse direction to perform the reverse driving of the electric motorcycle (S305). Subsequently, the reverse driving control unit 21d determines whether the ON operation on the reverse switch 142 is released (S306). When the ON operation of the reverse switch 142 is released, the reverse driving control unit 21d ends the reverse driving of the electric motorcycle, and the mode selection unit 21A releases the selection of the reverse mode (S307). At this time, the mode selection unit 21A sets the reverse mode flag recorded in the storage device 22 to OFF, and the processing proceeds to the standby mode.

### [Summary of Embodiments]

(1) As described above, the electric motorcycle 1 includes the electric motor 6, which is a driving source of the vehicle, the control device 20, a first operating member (reverse switch 42, brake lever 44) operated by the driver, and a second operating member (motor drive switch 43, reverse switch 142) operated by the driver. The control device 20 has the forward mode allowing forward driving of the vehicle and the reverse mode allowing reverse driving of the vehicle. When a predetermined operation (pressing operation or grasping operation) is performed on the first operating member and the second operating member, the control device 20 selects the reverse mode to drive the vehicle backward. The control device 20 automatically releases the selection of the reverse mode when the first operating member and the second operating member are no longer operated after the reverse driving of the vehicle. According to this electric vehicle, after the reverse driving, it is possible to prevent the driver from being lost as to whether the electric vehicle is still in the reverse mode. Note that the first operating member is not limited to the button type switch or the lever. The first operating member may be a pedal. The second operating member may be a lever or a pedal instead of the button type switch.
(2) The selection of the reverse mode is allowed when the vehicle speed is lower than a threshold value. According to this, the reverse mode can be selected after the vehicle speed is sufficiently lowered.
(3) The control device 20 has a standby mode in which both forward and reverse driving of the vehicle is not permitted. When the selection of the reverse mode is released, the control device 20 transitions to the standby mode. According to this, it is possible to prevent the vehicle from suddenly going forward after the reverse mode ends.
(4) The control device 20 drives the electric motor 6 in the forward direction in the forward mode and drives the electric motor 6 in the reverse direction in the reverse mode. According to this, the forward driving and the backward driving can be achieved by one electric motor 6, and thus the number of parts of the vehicle can be reduced.
(5) In the examples of FIGS. 3 to 7, the control device 20 selects the reverse mode during the period in which the pressing operation on the reverse switch 42, which is the first operating member, is maintained. This makes it possible for the driver to easily recognize the period during which the reverse mode is selected.
(6) In the examples of FIGS. 3 to 7, the control device 20 executes the reverse driving of the vehicle during the period in which the operation on the motor drive switch 43 is maintained in the reverse mode. According to this, the driver can easily recognize the period during which the vehicle is driven backward, and can subtly adjust the position of the vehicle in an easier way.
(7) In the examples of FIGS. 3 to 7, the reverse switch 42 and the motor drive switch 43 are disposed apart from each other. As a result, the attitude stability of the vehicle body can be improved during the reverse driving of the vehicle.
(8) In the examples of FIGS. 3 to 7, the reverse switch 42 is provided on one of the right portion and the left portion of the steering bar 40, and the motor drive switch 43 is provided on the other of the right portion and the left portion of the steering bar 40. According to this, the driver supports the right portion and the left portion of the steering bar during the reverse driving of the vehicle, and thus the attitude stability of the vehicle body can be improved.
(9) In the examples of FIGS. 3 to 7, the control device 20 may select the reverse mode when a pressing operation is performed on the reverse switch 42, and may execute the reverse driving of the vehicle when a pressing operation is performed on the motor drive switch 43 in the reverse mode. The reverse switch 42 is provided on the left side of the steering bar, and the motor drive switch 43 is provided on the right side of the steering bar 40. According to this, the driver supports the right portion and the left portion of the steering bar during the reverse driving of the vehicle, and thus the attitude stability of the vehicle body can be improved.
(10) In the examples of FIGS. 8 to 10, the control device 20 selects the reverse mode when the grip operation on the brake lever 44 and the pressing operation on the reverse switch 142 are continued for a predetermined time or longer. According to this, operability of the electric vehicle related to the reverse driving can be ensured.
(11) In the examples of FIGS. 8 to 10, the control device 20 executes the reverse driving of the vehicle during the period in which the pressing operation on the reverse switch 142 in the reverse mode is maintained.
(12) In the examples of FIGS. 8 to 10, the first operating member is a brake lever 44.
   This serves to prevent an increase in the number of parts of the vehicle.
(13) In the examples of FIGS. 3 to 7, the electric motorcycle 1 includes the electric motor 6, which is a driving source of the vehicle, the control device 20, the reverse switch 42, which is provided on one of the right portion and the left portion of the steering bar 40, and the motor drive switch 43, which is provided on the other of the right portion and the left portion of the steering bar 40. When the motor drive switch 43 receives the pressing operation while the reverse switch 42 receives the pressing operation, the control device 20 starts the reverse driving of the vehicle. According to this, the driver supports the right portion and the left portion of the steering bar 40 during the reverse driving of the vehicle, and thus the attitude stability of the vehicle body can be improved.
(14) In the examples of FIGS. 3 to 7, the control device 20 executes the reverse driving of the vehicle during a period in which the operation on the motor drive switch 43 is maintained in a state where the reverse switch 42 is operated. This makes it possible to subtly adjust the reverse driving of the vehicle. For example, by intermittently pressing the motor drive switch 43 while pressing the reverse switch 42, the reverse driving of the vehicle can be intermittently performed. As a result, it is possible to perform delicate positional adjustment of the vehicle.

### [Variation]

The electric vehicle proposed in the present disclosure is not limited to the electric motorcycle 1 described above.

In the examples shown in FIGS. 3 to 7, the reverse switch 42 and the motor drive switch 43 may be disposed in the same direction with respect to the center of the steering bar 40 in the left-right direction.

The second operating member may be an operating member that outputs an analog signal corresponding to the amount of pressing, instead of the motor drive switch 43 that outputs only the ON signal and the OFF signal. In this case, the control device 20 may control the electric motor 6 so that the electric motor 6 outputs a torque corresponding to the pressing amount of the second operating member.

## Claims

1. An electric vehicle comprising:
an electric motor (6) as a driving source of the vehicle;
a control device (20);
a first operating member (42) configured to be pressed by a driver; and
a second operating member (43) configured to be pressed by a driver; wherein the control device (20) includes a forward mode for allowing forward driving of the vehicle and a reverse mode for allowing reverse driving of the vehicle;
the control device (20) is configured to select the reverse mode to drive the vehicle backward in a case where a pressing operation is performed on the first operating member (42) and the second operating member (43); and
the control device (20) is configured to automatically release
selection of the reverse
mode when the first operating member (42) and the second operating member (43) are no longer pressed after reverse driving of the vehicle.

2. The electric vehicle according to claim 1, wherein the selection of the reverse mode is permitted in a case where a vehicle speed is lower than a threshold value.

3. The electric vehicle according to claim 1 or 2, wherein the control device (20) further
includes a standby mode in which both forward driving and reverse driving of the vehicle are not permitted, and
the control device (20) is configured to make transitions to the standby mode when releasing the selection of the reverse mode.

4. The electric vehicle according to any one of claims 1 to 3, wherein the control device (20) is configured to drive the electric motor (6) in a first direction in the forward mode and is configured to drive the electric motor (6) in a second direction in the reverse mode, the second direction being opposite to the first direction.

5. The electric vehicle according to any one of claims 1 to 4, wherein the control device (20) is configured to select the reverse mode during a period in which the pressing of the first operating member (42) is maintained.

6. The electric vehicle according to claim 5, wherein the control device (20) is configured to perform reverse driving of the vehicle during a period in which the pressing on the second operating member (43) in the reverse mode is maintained.

7. The electric vehicle according to any one of claims 1 to 6, wherein the first operating member (42) and the second operating member (43) are disposed apart from each other.

8. The electric vehicle according to claim 7, wherein the first operating member (42) is provided on one of a right portion and a left portion of a steering bar (40), and
the second operating member (43) is provided on the other of the right portion and the left portion of the steering bar (40).

9. The electric vehicle according to claim 8, wherein the control device (20) is configured to select the reverse mode when pressing is performed on the first operating member (42), and is configured to perform reverse driving of the vehicle when pressing is performed on the second operating member (43) in the reverse mode,
the first operating member (42) is provided on the left portion of the steering bar (40), and
the second operating member (43) is provided on the right portion of the steering bar (40).

10. The electric vehicle according to any one of claims 1 to 9, wherein the control device (20) is configured to select the reverse mode when pressing on the first operating member (42) and pressing on the second operating member (43) are continued for a predetermined time or longer.

11. The electric vehicle according to claim 10, wherein the control device (20) is configured to perform reverse driving of the vehicle during a period in which pressing on the second operating member (43) in the reverse mode is maintained.

12. The electric vehicle according to claim 10, wherein the first operating member is a brake lever.

13. An electric vehicle, comprising:
an electric motor (6) serving as a driving source of the vehicle;
a control device (20);
a first operating member (42, 44) provided on one of a right portion and a left portion of a steering bar (40); and
a second operating member (43, 142) provided on the other of the right portion and
the left portion of the steering bar (40), wherein
the control device (20) is configured to start reverse driving of the vehicle when at least the second operating member (43, 142) is pressed
in a state in which at least
the first operating member (42, 44) is being pressed and to stop reverse driving when the second operating member (43, 142) is released.

14. The electric vehicle according to claim 13, wherein the control device (20) is configured to perform reverse driving of the vehicle during a period in which an operation on the second operating member (43, 142) is maintained in a state in which the first operating member (42, 44) is being operated.

15. A method for controlling an electric vehicle with an electric motor (6) as a driving source of the vehicle, a first operating member (42) configured to be pressed by a driver, and a second operating member (43) configured to be pressed by a driver, the method comprises:
a forward mode for allowing forward driving of the vehicle and a reverse mode for allowing reverse driving of the vehicle, and
selecting the reverse mode to drive the vehicle backward in a case where a pressing operation is performed on the first operating member (42) and the second operating member (43); and
automatically releasing selection of the reverse mode when the first operating member (42, 44) and the second operating member (43, 142) are no longer pressed after reverse driving of the vehicle.

## Patentansprüche

1. Ein Elektro-Fahrzeug, das umfasst:
einen Elektro-Motor (6) als Antriebsquelle des Fahrzeugs;
eine Steuer-Vorrichtung (20);
ein erstes Betätigungs-Element (42), das konfiguriert ist, um von einem Fahrer gedrückt zu werden; und
ein zweites Betätigungs-Element (43), das konfiguriert ist, um von einem Fahrer gedrückt zu werden; wobei
die Steuer-Vorrichtung (20) einen Vorwärts-Modus um Vorwärts-Fahren des Fahrzeugs zu gestatten und einen Rückwärts-Modus um Rückwärts-Fahren des Fahrzeugs zu gestatten, beinhaltet;
die Steuer-Vorrichtung (20) ist konfiguriert, um den Rückwärts-Modus auszuwählen, um das Fahrzeug rückwärts zu fahren, in einem Fall in dem ein Druckvorgang auf das erste Betätigungs-Element (42) und das zweite Betätigungs-Element (43) ausgeführt wird; und
die Steuer-Vorrichtung (20) ist konfiguriert, um die Auswahl des Rückwärts-Modus automatisch freizugeben, wenn das erste Betätigungs-Element (42) und das zweite Betätigungs-Element (43) nach dem Rückwärts-Fahren des Fahrzeugs nicht mehr weiter gedrückt werden.

2. Das Elektro-Fahrzeug gemäß Anspruch 1, wobei die Auswahl des Rückwärts-Modus erlaubt ist, in einem Fall in dem die Fahrzeug-Geschwindigkeit unter einem SchwellWert liegt.

3. Das Elektro-Fahrzeug gemäß Anspruch 1 oder 2, wobei die Steuer-Vorrichtung (20) weiterhin einen Standby-Modus beinhaltet, in dem beides, das Vorwärts-Fahren und das Rückwärts-Fahren des Fahrzeugs nicht erlaubt sind, und
die Steuer-Vorrichtung (20) konfiguriert ist, um einen Übergang zu Standby-Modus zu machen, wenn der Rückwärts-Modus freigegeben ist.

4. Das Elektro-Fahrzeug gemäß irgendeinem der Ansprüche 1 bis 3, wobei die Steuer-Vorrichtung (20) konfiguriert ist, um den Elektro-Motor (6) im Vorwärts-Modus in eine erste Richtung anzutreiben, und konfiguriert ist, um den Elektro-Motor (6) im Rückwärts-Modus in eine zweite Richtung anzutreiben, die zweite Richtung ist entgegengesetzt zu der ersten Richtung.

5. Das Elektro-Fahrzeug gemäß irgendeinem der Ansprüche 1 bis 4, wobei die Steuer-Vorrichtung (20) konfiguriert ist, um den Rückwärts-Modus auszuwählen, während eines Zeitraums, in dem das Drücken des ersten Betätigungs-Elements (42) aufrechterhalten wird.

6. Das Elektro-Fahrzeug gemäß Anspruch 5, wobei die Steuer-Vorrichtung (20) konfiguriert ist, um ein Rückwärts-Fahren des Fahrzeugs auszuwählen, während eines Zeitraums, in dem das Drücken auf das zweite Betätigungs-Element (43) im Rückwärts-Modus aufrechterhalten wird.

7. Das Elektro-Fahrzeug gemäß irgendeinem der Ansprüche 1 bis 6, wobei das erste Betätigungs-Element (42) und das zweite Betätigungs-Element (43) getrennt voneinander angeordnet sind.

8. Das Elektro-Fahrzeug gemäß Anspruch 7, wobei das erste Betätigungs-Element (42) an einem von einem rechten Abschnitt und einem linken Abschnitt einer Lenkstange (40) vorgesehen ist, und
das zweite Betätigungs-Element (43) auf dem anderen von dem rechten Abschnitt und dem linken Abschnitt einer Lenkstange (40) vorgesehen ist.

9. Das Elektro-Fahrzeug gemäß Anspruch 8, wobei die Steuer-Vorrichtung (20) konfiguriert ist, um den Rückwärts-Modus auszuwählen, wenn ein Druck auf das erste Betätigungs-Element (42) ausgeführt wird, und konfiguriert ist, um ein Rückwärts-Fahren des Fahrzeugs durchzuführen, wenn ein Druck auf das zweite Betätigungs-Element (43) in dem Rückwärts-Modus ausgeführt wird,
das erste Betätigungs-Element (42) auf dem linken Abschnitt der Lenkstange (40) vorgesehen ist, und
das zweite Betätigungs-Element (43) auf dem rechten Abschnitt der Lenkstange (40) vorgesehen ist.

10. Das Elektro-Fahrzeug gemäß irgendeinem der Ansprüche 1 bis 9, wobei die Steuer-Vorrichtung (20) konfiguriert ist, um den Rückwärts-Modus auszuwählen, wenn das Drücken auf das erste Betätigungs-Element (42) und das Drücken auf das zweite Betätigungs-Element (43) für eine vorbestimmte Zeit oder länger fortgesetzt werden.

11. Das Elektro-Fahrzeug gemäß Anspruch 10, wobei die Steuer-Vorrichtung (20) konfiguriert ist, um ein Rückwärts-Fahren des Fahrzeugs während eines Zeitraums durchzuführen, in dem das Drücken auf das zweite Betätigungs-Element (43) im Rückwärts-Modus aufrechterhalten wird.

12. Das Elektro-Fahrzeug gemäß Anspruch 10, wobei das erste Betätigungs-Element ein Bremshebel ist.

13. Ein Elektro-Fahrzeug, das umfasst:
einen Elektro-Motor (6), der als Antriebsquelle des Fahrzeugs dient;
eine Steuer-Vorrichtung (20);
ein erstes Betätigungs-Element (42, 44), das an einem von einem rechten Abschnitt und einem linken Abschnitt einer Lenkstange (40) vorgesehen ist; und
ein zweites Betätigungs-Element (43, 142), das auf dem anderen von dem rechten Abschnitt und dem linken Abschnitt einer Lenkstange (40) vorgesehen ist, wobei die Steuer-Vorrichtung (20) konfiguriert ist, um ein Rückwärts-Fahren des Fahrzeugs zu starten, wenn zumindest das zweite Betätigungs-Element (43) gedrückt ist, in einem Zustand in dem zumindest das erste Betätigungs-Element (42, 44) gedrückt ist, und um ein Rückwärts-Fahren des Fahrzeugs zu stoppen, wenn das zweite Betätigungs-Element (43, 142) freigegeben ist.

14. Das Elektro-Fahrzeug gemäß Anspruch 13, wobei die Steuer-Vorrichtung (20) konfiguriert ist, um ein Rückwärts-Fahren des Fahrzeugs zu starten durchzuführen, während eines Zeitraums, in dem eine Betätigung des zweiten Betätigungs-Elements (43, 142) in aufrechterhalten wird, einem Zustand in dem das erste Betätigungs-Element (42, 44) betätigt wird.

15. Ein Verfahren zum Steuern eines Elektro-Fahrzeugs mit einem Elektro-Motor (6) als Antriebsquelle des Fahrzeugs, einem ersten Betätigungs-Element (42), das konfiguriert ist, um von einem Fahrer gedrückt zu werden, und einem zweiten Betätigungs-Element (43), das konfiguriert ist, um von einem Fahrer gedrückt zu werden, wobei das Verfahren umfasst:
einen Vorwärts-Modus, um ein Vorwärts-Fahren des Fahrzeugs zu ermöglichen, und einen Rückwärts-Modus, um ein Rückwärts-Fahren des Fahrzeugs zu ermöglichen, und
Auswählen des Rückwärts-Modus, um das Fahrzeug in rückwärts zu fahren, einem Fall in dem ein Druckvorgang auf das erste Betätigungs-Element (42) und das zweite Betätigungs-Element (43) durchgeführt wird; und
automatische Freigabe der Auswahl des Rückwärts-Modus, wenn das erste Betätigungs-Element (42, 44) und das zweite Betätigungs-Element (43, 142) nach dem Rückwärts-Fahren des Fahrzeugs nicht mehr weiter gedrückt werden.

## Revendications

1. Véhicule électrique comprenant :
un moteur électrique (6) en tant que source d'entraînement du véhicule ;
un dispositif de contrôle (20) ;
un premier élément de fonctionnement (42) configuré pour être pressé par un conducteur ; et
un deuxième élément de fonctionnement (43) configuré pour être pressé par un conducteur ; dans lequel
le dispositif de contrôle (20) inclut un mode de marche avant pour permettre un entraînement en marche avant du véhicule et un mode de marche arrière pour permettre un entraînement en marche arrière du véhicule ;
le dispositif de contrôle (20) est configuré pour sélectionner le mode de marche arrière pour entraîner le véhicule en marche arrière dans un cas où une opération de pression est effectuée sur le premier élément de fonctionnement (42) et le deuxième élément de fonctionnement (43) ; et
le dispositif de contrôle (20) est configuré pour libérer automatiquement une sélection du mode de marche arrière lorsque le premier élément de fonctionnement (42) et le deuxième élément de fonctionnement (43) ne sont plus pressés après un entraînement en marche arrière du véhicule.

2. Le véhicule électrique selon la revendication 1, dans lequel la sélection du mode de marche arrière est permise dans un cas où une vitesse de véhicule est inférieure à une valeur de seuil.

3. Le véhicule électrique selon la revendication 1 ou 2, dans lequel le dispositif de contrôle (20) inclut en outre un mode d'attente dans lequel à la fois un entraînement en marche avant et un entraînement en marche arrière du véhicule ne sont pas permis, et
le dispositif de contrôle (20) est configuré pour effectuer des transitions vers le mode d'attente lors d'une libération de la sélection du mode de marche arrière.

4. Le véhicule électrique selon l'une quelconque des revendications 1 à 3, dans lequel le dispositif de contrôle (20) est configuré pour entraîner le moteur électrique (6) dans une première direction dans le mode de marche avant et est configuré pour entraîner le moteur électrique (6) dans une deuxième direction dans le mode de marche arrière, la deuxième direction étant opposée à la première direction.

5. Le véhicule électrique selon l'une quelconque des revendications 1 à 4, dans lequel le dispositif de contrôle (20) est configuré pour sélectionner le mode de marche arrière sur une période sur laquelle la pression sur le premier élément de fonctionnement (42) est maintenue.

6. Le véhicule électrique selon la revendication 5, dans lequel le dispositif de contrôle (20) est configuré pour effectuer un entraînement en marche arrière du véhicule sur une période sur laquelle la pression sur le deuxième élément de fonctionnement (43) dans le mode de marche arrière est maintenue.

7. Le véhicule électrique selon l'une quelconque des revendications 1 à 6, dans lequel le premier élément de fonctionnement (42) et le deuxième élément de fonctionnement (43) sont disposés séparés l'un de l'autre.

8. Le véhicule électrique selon la revendication 7, dans lequel le premier élément de fonctionnement (42) est disposé sur une d'une partie droite et d'une partie gauche d'un guidon (40), et le deuxième élément de fonctionnement (43) est disposé sur l'autre de la partie droite et de la partie gauche du guidon (40).

9. Le véhicule électrique selon la revendication 8, dans lequel le dispositif de contrôle (20) est configuré pour sélectionner le mode de marche lors d'une pression sur le premier élément de fonctionnement (42), et est configuré pour effectuer un entraînement en marche arrière du véhicule lors d'une pression sur le deuxième élément de fonctionnement (43) en mode de marche arrière,
le premier élément de fonctionnement (42) est disposé sur la partie gauche du guidon (40), et
le deuxième élément de fonctionnement (43) est disposé sur la partie droite du guidon (40).

10. Le véhicule électrique selon l'une quelconque des revendications 1 à 9, dans lequel le dispositif de contrôle (20) est configuré pour sélectionner le mode de marche arrière lorsqu'une pression sur le premier élément de fonctionnement (42), et une pression sur le deuxième élément de fonctionnement (43) sont continues sur une durée prédéterminée ou plus longue.

11. Le véhicule électrique selon la revendication 10, dans lequel le dispositif de contrôle (20) est configuré pour effectuer un entraînement en marche arrière du véhicule sur une période sur laquelle une pression sur le deuxième élément de fonctionnement (43) dans le mode de marche arrière est maintenue.

12. Le véhicule électrique selon la revendication 10, dans lequel le premier élément de fonctionnement est un levier de frein.

13. Véhicule électrique, comprenant :
un moteur électrique (6) servant de source d'entraînement du véhicule ;
un dispositif de contrôle (20) ;
un premier élément de fonctionnement (42, 44) disposé sur une d'une partie droite et d'une partie gauche d'un guidon (40) ; et
un deuxième élément de fonctionnement (43, 142) disposé sur l'autre de la partie droite et de la partie gauche du guidon (40), dans lequel
le dispositif de contrôle (20) est configuré pour démarrer un entraînement en marche arrière du véhicule lorsqu'au moins le deuxième élément de fonctionnement (43, 142) est pressé dans un état dans lequel au moins le premier élément de fonctionnement (42, 44) fait l'objet d'une pression et pour arrêter un entraînement en marche arrière lorsque le deuxième élément de fonctionnement (43, 142) est relâché.

14. Le véhicule électrique selon la revendication 13, dans lequel le dispositif de contrôle (20) est configuré pour effectuer un entraînement en marche arrière du véhicule sur une période sur laquelle une opération sur le deuxième élément de fonctionnement (43, 142) est maintenue dans un état dans lequel le premier élément de fonctionnement (42, 44) est en cours de fonctionnement.

15. Procédé de contrôle d'un véhicule électrique avec un moteur électrique (6) en tant que source d'entraînement du véhicule, un premier élément de fonctionnement (42) configuré pour être pressé par un conducteur, et un deuxième élément de fonctionnement (43) configuré pour être pressé par un conducteur, le procédé comprend :
un mode de marche avant pour permettre un entraînement en marche avant du véhicule et un mode de marche arrière pour permettre un entraînement en marche arrière du véhicule, et
sélection du mode de marche arrière pour entraîner le véhicule en marche arrière dans un cas où une opération de pression est effectuée sur le premier élément de fonctionnement (42) et le deuxième élément de fonctionnement (43) ; et
libération automatique d'une sélection du mode de marche arrière lorsque le premier élément de fonctionnement (42, 44) et le deuxième élément de fonctionnement (43, 142) ne sont plus pressés après un entraînement en marche arrière du véhicule.
